# EUROPÄISCHE PATENTANMELDUNG

(11) **EP 4 810 410 A1**
(43) Veröffentlichungstag der Anmeldung: **23.09.2026**
(21) Anmeldenummer: 26165036.0
(22) Anmeldetag: 16.03.2026
(51) Int. Cl.: B65G 15/42

(54) **FÖRDERANLAGE**

(30) Priorität: 20.03.2025 DE 102025110918
(71) Anmelder: Holtec GmbH & Co. KG, 53940 Hellenthal (DE)
(72) Erfinder: Pützer, Alfred, 53940 Hellenthal (DE); Schruff, Florian, 53940 Hellenthal (DE)
(74) Vertreter: Gerstein, Hans Joachim

(57) **Zusammenfassung**

Eine Förderanlage (1) wird beschrieben, die zum Längstransport von länglichem Stückgut (2), insbesondere von Baumstämmen, in einer Transportrichtung (TR_{H}) mit einem umlaufenden, in einem Gestell (3) gelagerten Fördergurt (4) ausgebildet ist. An oder auf dessen Oberseite (4.1) ist eine Mehrzahl von Mitnehmern (5) vorgesehen, die in Transportrichtung (TR_{H}) in einem ersten Abstand (A) zueinander beabstandet sind und auf die das Stückgut (2) auflegbar ist. Der Fördergurt (4) liegt mit seiner der Oberseite (4.1) gegenüberliegenden Unterseite (4.2) auf einer Mehrzahl von sich quer zur Transportrichtung (TR_{H}) erstreckenden Rollen (6) auf, die in dem Gestell (3) drehbar gelagert und in Transportrichtung (TR_{H}) in einem zweiten Abstand (B) zueinander beabstandet sind.

## Beschreibung

Die Erfindung betrifft eine Förderanlage zum Längstransport von länglichem Stückgut, insbesondere Baumstämmen, in einer Transportrichtung mit einem umlaufenden, in einem Gestell gelagerten Fördergurt, an oder auf dessen Oberseite eine Mehrzahl von Mitnehmern vorgesehen ist, die in einer Transportrichtung in einem ersten Abstand zueinander beabstandet sind und auf die das Stückgut auflegbar ist.

Eine solche Förderanlage, mit der unter anderem in Sägewerken Baumstämme zu Sortierboxen transportiert werden, um sie nach Durchmesser und Länge zu sortieren, ist beispielsweise aus der WO 2023/066781 bekannt. Die Mitnehmer, auf denen die Baumstämme aufliegen und abgestützt werden, sind mit dem Fördergurt lösbar verbunden und umgreifen diesen. Der Fördergurt dient zum Ziehen der Mitnehmer in Transportrichtung. Zur Führung und Lagerung der Mitnehmer weist jeder Mitnehmer an seiner Unterseite Rollen auf, die in Schienen im Gestell laufen. Problematisch bei dieser Förderanlage ist, dass einerseits die Lagerung jedes Mitnehmers kostenaufwändig ist und andererseits zwischen die Mitnehmer Staub und sonstige Verunreinigungen eindringen und dann zwischen Schiene und Rolle gelangen können, was nicht nur den Energieaufwand und den Geräuschpegel erhöhen kann, sondern auch eine regelmäßige Reinigung erfordert, um Beschädigungen und damit einhergehendem Ausfall der Anlage vorzubeugen. Die Schienen müssen sowohl sehr genau gefertigt als auch zueinander ausgerichtet sein, da bereits geringe Abweichung zu erhöhtem Lärm führen. Da zur Reinigung die Förderanlage außer Betrieb genommen werden muss, erhöhen sich zudem auch die Betriebskosten. Zur Reduzierung des Problems der Verschmutzung können beidseitig zu den Mitnehmern Abdeckbleche vorgesehen werden. Diese Abdeckbleche dichten den Zwischenraum natürlich nicht (hermetisch) ab. In Abhängigkeit des Spaltmaßes können nur gröbere, beispielsweise durch Rindenabfall hervorgerufene Verunreinigungen vermieden werden. Hierzu sind die Abdeckbleche seitlich dicht an die Mitnehmer herangeführt und liegen knapp unter der Oberseite der Mitnehmer, auf denen das Stückgut aufliegt. Die Verwendung von Abdeckblechen birgt aber das Risiko, dass gröbere Brocken seitlich zwischen den Mitnehmer und das Abdeckblech eingequetscht werden und beim Weitertransport des Mitnehmers dann das Abdeckblech verbogen oder der Mitnehmer beschädigt wird. Auch dies kann zum Ausfall der Förderanlage führen und die Betriebskosten erhöhen.

Im Bereich der Sortierboxen werden mit Greifern an Baggern oder Radladern die Holzstämme entnommen oder sie werden manipuliert, wenn sie nicht richtig in der Box liegen. Dabei kann es vorkommen, dass der Greifer gegen einen Mitnehmer schlägt, was zu Beschädigungen am Mitnehmer und auch an den Rollen des Mitnehmers führen kann.

Von dieser Problemstellung ausgehend liegt der Erfindung die Aufgabe zugrunde, eine gattungsgemäße Förderanlage so fortzubilden, dass die beschriebenen Probleme vermieden werden und eine hohe Betriebssicherheit gewährleistet ist.

Die Aufgabe wird mit der Förderanlage mit den Merkmalen des Anspruchs 1 gelöst. Vorteilhafte Ausführungsformen sind in den Unteransprüchen beschrieben.

Es wird vorgeschlagen, dass der Fördergurt mit seiner der Oberseite gegenüberliegenden Unterseite auf einer Mehrzahl von sich quer zur Transportrichtung erstreckenden Rollen aufliegt, die in dem Gestell drehbar gelagert und in der Transportrichtung in einem zweiten Abstand zueinander beabstandet sind.

Durch diese Ausgestaltung des Fördergurtes als Förderband kann dieses über die gesamte Transportstrecke auf der Förderanlage gelagert werden, was die Geräuschemission deutlich reduziert. Es hat sich gezeigt, dass ein längliches Stückgut, wie insbesondere ein Baumstamm, mit einer Führung des Förderbandes auf Rollen und Auflagerung des Stückgutes auf Mitnehmern des Förderbandes ruhig und sicher gelagert und mit Hilfe der erhöhten Lagerung auf den Mitnehmern gut ausgeworfen werden kann.

Eine von der Lagerung der Mitnehmer, die im Stand der Technik auf Schienen laufen, separate Lagerung und Führung des Fördergurts ist nicht notwendig. Der Fördergurt kann mit Gurtführungsrollen geführt werden. Außerdem kann der Fördergurt freiliegen, sodass Verunreinigungen vom Fördergurt selbst tätig herabfallen, während des Transports abgeblasen oder über geeignete Abstreifer aus dem Transportbereich abgeführt werden können. Die Mitnehmer können bei dieser Ausgestaltung weit oberhalb des Fördergurts enden, sodass auch das Stückgut weit oberhalb des Fördergurts transportiert wird und durch Auswerfer, die neben oder unter dem Fördergurt angeordnet sind, einfach ausgeworfen werden kann, um von dort dann in eine Sortierbox, zu einer Verarbeitungsmaschine oder einem Lagerplatz zu gelangen. Der Fördergurt kann an den Seiten von oben abgedeckt werden, damit ein Baggergreifer die Tragrollen nicht beschädigt und obere Gurtführungsrollen vor Beschädigung durch einen Bagger und abstürzende Baumstämme geschützt werden.

Vorzugsweise sind der erste Abstand und der zweite Abstand ungleich groß. Dabei ist es besonders vorteilhaft, wenn der zweite Abstand kein Vielfaches des ersten Abstands ist. Dadurch ruckelt das auf den Mitnehmern aufliegenden Stückgut beim Überfahren der Rollen noch weniger und läuft noch gleichmäßiger. Hierdurch wird die Geräuschemission weiter reduziert, was sich insbesondere bei langen Stückgütern, wie beispielsweise Baumstämmen besonders bemerkbar macht.

Wenn der erste Abstand zwischen zwei aufeinanderfolgenden Mitnehmern, d.h. der Mittenabstand eines Paares benachbarter Mitnehmer, größer als der zweite Abstand zwischen zwei aufeinanderfolgenden Rollen, d.h. der Mittenabstand der Achsen der Rollen bzw. der Abstand der Linienauflager zweier benachbarter Rollen, ist, kann sichergestellt werden, dass immer ein Mitnehmer auf einer Rolle gelagert ist bzw. die Zeit, in denen das längliche Stückgut über einen Mitnehmer direkt auf einer Rolle abgestützt wird, vergrößert ist. Dies gilt auch, wenn die Rundholzstämme im praktischen Einsatz oft nicht schön gerade sind, was dazu führt, dass ein Stamm meistens nur auf zwei oder maximal drei Mitnehmern aufliegt.

Vorzugsweise kann der zweite Abstand optional einstellbar sein. Damit kann der Abstand der Rollen an den Abstand der Mitnehmer angepasst und die Anlage auf die Länge des transportierten Stückguts angepasst werden. Die Rollen sind über ihre Achse oder je einen Achsbolzen an ihren Enden in Lagerbohrungen ("Löchern") im Gestell drehbar gelagert. Durch eine enge Lochfolge, also einem kleinen Abstand zwischen den Lagerbohrungen, wird die Variabilität der Einstellung erhöht. Damit ist es dann beispielsweise möglich, die Rollen in Abhängigkeit von dem Durchmesser der Rollen möglichst nahe nebeneinander zu positionieren und damit längliches Stückgut mit größtmöglicher Laufruhe sicher zu befördern. Sämtliche den Fördergurt tragenden Rollen der Förderanlage haben dabei vorzugsweise denselben Durchmesser.

Jeder Mitnehmer ist mit dem Fördergurt lösbar verbunden, beispielsweise verschraubt. Hierzu können vorzugsweise mindestens zwei Schraubbolzen vorgesehen sein. Bevorzugt ist hierzu in den Fördergurt eine Befestigungsplatte eingesetzt, die durch den Fördergurt hindurch mit den Mitnehmern verschraubt wird.

Vorzugsweise ist jeder Mitnehmer mehrteilig, besonders bevorzugt zweiteilig ausgestaltet. Wenn jeder Mitnehmer ein oberes Auflager (erstes Teil) und eine untere Stützplatte (zweites Teil) aufweist, kann das Auflager, auf der das Stückgut aufliegt, als Verschleißteil leicht ausgewechselt werden. Das obere Auflager kann aus einem dicken Kunststoff hergestellt sein. Dies kann aber dazu führen, dass der Stamm aufgrund von Vibrationen zu stark in Förderrichtung wandert. Vorteilhafter ist die Ausführung des oberen Auflagers als dünnes Blech.

Die Oberseite des Mitnehmers, d.h. die obere freie Stirnseite des oberen Auflagers, kann bevorzugt scharfkantig sein. Dies verhindert auf einfache Weise, dass sich das längliche Stückgut, wie insb. Baumstämme, bei einer breiten Auflagefläche während des Transportes in Förderrichtung verschieben und dann die Abwurfposition nicht ausreichend genau getroffen wird. Hierzu kann ein als vertikal zur Ebene des Fördergurtes abragendes Blech ausgeführtes oberes Auflager an seiner freien oberen Stirnseite, die dem Fördergurt gegenüberliegt, zu einer Messerleiste angefast sein.

Die Stützplatte ist vorzugsweise lösbar mit dem Fördergurt verbunden.

Der Fördergurt kann auf seiner der Auflageebene der Mitnehmer gegenüberliegenden Unterseite Befestigungsplatten haben, die jeweils einem der Mitnehmer diametral gegenüberliegen und mit einem zugeordneten Mitnehmer verbunden sind.

Die Befestigungsplatte kann in eine Ausnehmung des Fördergurtes eingebaut sein. Damit kann eine plane Ebene der Unterseite des Fördergurtes auch mit eingebauten Befestigungsplatten sichergestellt werden, so dass die Unterseite möglichst ruckelfrei auf den Rollen abrollt. Die Breite der Befestigungsplatten in Transportrichtung sollte möglichst groß sein, um möglichst große Abstützintervalle des Mitnehmers auf den Rollen über die Befestigungsplatte zu bewirken und die Laufruhe weiter zu verbessern. Die Breite der Befestigungsplatten ist durch den Umlenkradius des Fördergurtes begrenzt. Sie sollte mindestens die Hälfte des zweiten Abstandes der Rollen und bevorzugt mindestens drei Viertel (3/4) des zweiten Abstandes betragen.

Wenn die dem Fördergurt abgewandte Oberseite eines Mitnehmers im Querschnitt konkav ausgestaltet ist, wird das Stückgut darin sicher aufgenommen. Unter einer konkaven Ausgestaltung soll auch verstanden werden, dass der Mitnehmer und insbesondere das Auflager mit konisch nach innen weisenden Schrägflächen oder gekrümmten seitlichen Halteflächen versehen ist. Dabei kann das obere Auflager des Mitnehmers auch in Förderrichtung V-förmig ausgerichtet sein, so dass sich von der Mittelachse des oberen Trums des Förderbandes zwei Abschnitte des oberen Auflagers diagonal zu den Randbereichen des Förderbandes hin erstrecken.

Die Erfindung wird nachfolgend anhand eines Ausführungsbeispiels mit den beigefügten Zeichnungen näher erläutert. Es zeigen:
- Figur 1 -: eine schematische Darstellung einer Förderanlage in Seitenansicht;
- Figur 2 -: den Schnitt entlang der Linie II-II nach Figur 1;
- Figur 3 -: eine schematische Darstellung des Fördergurts mit einem darauf befestigten Mitnehmer im Schnitt;
- Figur 4 -: eine perspektivische Teilansicht des Fördergurtes mit einem darauf befestigten Mitnehmer;
- Figur 5 -: Frontansicht des Mitnehmers auf dem Fördergurt aus Figur 4;
- Figur 6 -: eine perspektivische Teilansicht des Fördergurtes auf die Rückseite des darauf befestigten Mitnehmers aus Figur 4;
- Figur 7 -: eine perspektivische Ansicht auf die Unterseite des Fördergurtes mit dem darauf befestigten Mitnehmer;
- Figur 8 -: Draufsicht auf den Fördergurt mit darauf befestigtem Mitnehmer;
- Figur 9 -: Seitenansicht des Fördergurtes mit darauf befestigtem Mitnehmer.

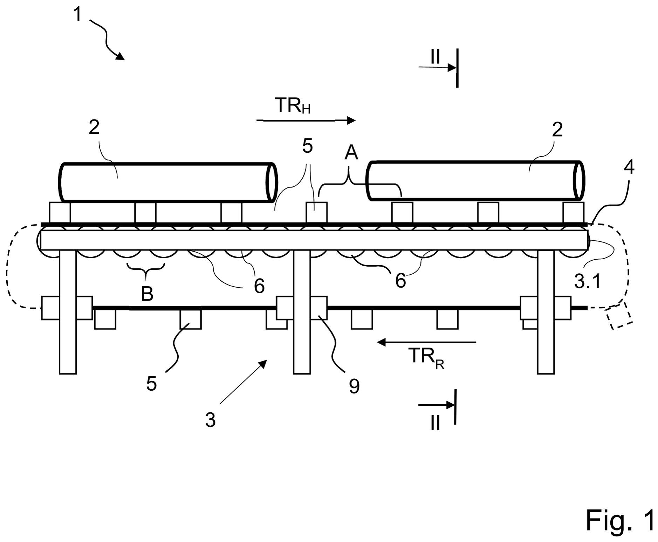

Figur 1 zeigt die Seitenansicht einer erfindungsgemäßen Förderanlage 1 in sehr vereinfachter Darstellung. Sie besteht im Wesentlichen aus dem Gestell 3, den Rollen 6, dem endlosen Fördergurt 4, einem hier nicht näher dargestellten Antrieb und den Mitnehmern 5. In dem Gestell 3 ist in Transportrichtung TR_{H} eine Mehrzahl von Rollen 6 eingesetzt, die zueinander in einem Abstand B der Achsen 6.1 benachbarter Rollen 6 bzw. der aufeinanderfolgenden Linienauflager der aufeinanderfolgenden Rollen 6 beabstandet sind. Auf dem Fördergurt 4 sind die Mitnehmer 5 befestigt, die zueinander in einem Abstand A beabstandet sind. Die Abstände A und B können fest eingestellt sein. Optional ist aber auch eine variierbare Ausführungsform denkbar, bei der die Abstände frei wählbar und in Abhängigkeit des zu fördernden Stückguts einstellbar sind. Der erste Abstand A und der zweite Abstand B sind nicht gleich groß. In der Zeichnung ist erkennbar, dass der erste Abstand A vorzugsweise größer als der zweite Abstand B ist.

Es ist erkennbar, dass die Rollen 6 möglichst dicht nebeneinander positioniert sind. Damit kann die Laufruhe verbessert werden. Der zweite Abstand B zwischen den Achsen 6.1 zweier aufeinanderfolgender Rollen 6 sollte ein Verhältnis von weniger als 1,1 zum Durchmesser der Rollen 6 aufweisen, um eine größtmögliche Laufruhe zu bewirken. Ein geringer Abstand der Rollen 6 voneinander ist dabei notwendig, so dass der zweite Abstand B größer als der Durchmesser der Rollen 6 ist.

Der Fördergurt 4 ist endlos ausgebildet und wird von dem nicht dargestellten Antrieb im Gestell 3 umlaufend angetrieben. Die Länge des Fördergurts 4 in Transportrichtung TR_{H} ist beliebig wählbar und abhängig von dem zu fördernden Stückgut 2. Im Ausführungsbeispiel soll das Stückgut 2 Baumstämme sein, die auf der Oberseite der Mitnehmer 5 aufliegen und hintereinander zu einer nicht gezeigten Abwurfstelle transportiert werden, um dort von der Förderanlage 1 abgeworfen zu werden und dann zu weiteren, ebenfalls nicht dargestellten Bearbeitungsmaschinen, beispielsweise einer Säge, einem Entrinder oder einer Lagerbox zu gelangen. Der Fördergurt 4 kann, sofern notwendig, aus mehreren Segmenten bestehen, die miteinander verbunden, beispielsweise verschraubt sind, um die gewünschte Länge in Transportrichtung TR_{H} einzustellen.

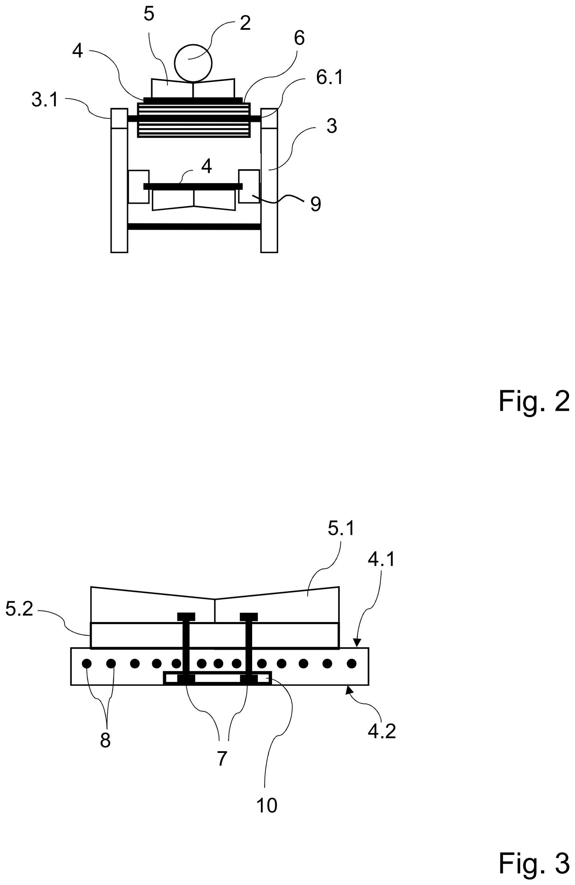

Mit seiner Unterseite 4.2 liegt der obere Trum des endlos ausgebildeten Fördergurts 4, der über Stahlseile 8 in seinem Inneren verstärkt ist, auf den drehbar im Gestell 3 gelagerten Rollen 6 auf. Die Stahlseile 8 erstrecken sich in Transportrichtung TR_{H} bzw. der Rückführrichtung TR_{R}. Auf der Oberseite 4.1 des Fördergurts 4 sind die Mitnehmer 5 befestigt. Wie Figur 3 erkennen lässt, sind die Mitnehmer 5 zweiteilig ausgebildet und bestehen aus einem oberen Auflager 5.1 und einer unteren Stützplatte 5.2. In den Fördergurt 4 ist von seiner Unterseite 4.2 eine Befestigungsplatte 10 eingesetzt, die mindestens zwei in vertikaler Richtung weisende Bohrungen aufweist. Entsprechende Bohrungen sind im Fördergurt 4, in der Stützplatte 5.2 und im Auflager 5.1 vorgesehen. Die Bohrungen im Auflager 5.1 sind vorzugsweise als Stufenbohrungen ausgebildet, sodass der Fördergurt 4 und die Mitnehmer 5 über mindestens zwei Schraubbolzen 7 miteinander verschraubt werden können, wobei die oberen Enden der Schraubbolzen im oberen Auflager 5.1 versenkt sind.

Bei einer Ausführung der Auflager 5.1 in Form von Kunststoffmitnehmern sind in der unteren Stützplatte 5.2 Gewindebohrungen vorhanden. Damit kann sowohl Befestigungsplatte 10 von unten als auch das Auflager 5.1 von oben mit separaten Schrauben jeweils mit der Stützplatte 5.2 verschraubt werden. Wenn die Auflager 5.1 in Stahl ausgeführt sind, können das Auflager 5.1 mit der unteren Stützplatte 5.2 verschweißt werden. Die untere Stützplatte 5.2 kann dabei dünner ausgeführt ein und Durchgangsbohrungen haben. Oben auf der unteren Stützplatte 5.2 kann eine selbstsichernde Mutter 11 angebracht sein. Die lösbare Verbindung zwischen den Mitnehmern 5 und dem Fördergurt 4 ist sinnvoll, um den ersten Abstand A einstellen zu können. Es ist in der Regel nicht vorgesehen, die Abstände A nachträglich zu ändern, die Abstände A können aber von Anlage zu Anlage werksseitig bei der Erstinstallation unterschiedlich ausgeführt werden.

Die Oberseite der Mitnehmer 5 ist, wie die Figuren 2 und 3 erkennen lassen, im Querschnitt muldenförmig ausgebildet, um die Baumstämme 2 sicher lagern zu können. Die Mulde kann konkav oder V-förmig, bzw. U-förmig ausgestaltet sein. Bei einem Mitnehmer 5 aus Stahl ist die Oberseite vorteilhafter Weise scharfkantig ausgeführt. Die Zweiteiligkeit der Mitnehmer 5 bietet den Vorteil, dass das obere Auflager 5.1, das im Betrieb einem Verschleiß unterworfen ist, leicht und kostengünstig austauschbar ist und die untere Stützplatte 5.2, starr und hart ausgebildet werden kann, um die Verwindungssteifigkeit des Fördergurts 4 zu erhöhen. Bei dem Mitnehmer 5 aus Stahl können das obere Auflager 5.1 und die untere Stützplatte 5.2 miteinander verschweißt sein und bei Verschleiß oder Beschädigungen komplett ausgetauscht werden.

Zur Einstellbarkeit des zweiten Abstands B der Rollen 6 zueinander sind in den sich gegenüberliegenden Längsstreben 3.1 des Gestells 3 in Transportrichtung TR_{H} eine Vielzahl regelmäßig beabstandeter Löcher bzw. Bohrungen (Lagerbohrungen) vorgesehen, die hier nicht näher dargestellt sind. Da die Rollen 6 möglichst nah zueinander angeordnet werden sollten und die Abstände A werksseitig eingestellt werden, sind lediglich eine Vielzahl an Löchern im vorgesehenen Abstand A, bevorzugt im Mindestabstand der etwas größer als der Durchmesser einer Rolle 6 ist, erforderlich. In jeweils zwei sich gegenüberliegenden Löchern werden die Rollen 6 über ihre Achsen 6.1 oder zwei an den beiden Enden jeder Rolle 6 vorgesehene Achsstummel 6.1 drehbar im Gestell 3 gelagert. Je kleiner der Abstand zwischen den Löchern ist, umso größer ist die Einstellbarkeit des Abstands B. Entsprechend kann der Fördergurt 4 gelocht sein, um den ersten Abstand A einstellen zu können. Die zu wählenden Abstände A und B sind abhängig vom Gewicht und der Länge. Der Abstand A ist nur abhängig von der Länge des Stückgutes, nicht aber vom Gewicht des Stückgutes. Der Abstand B könnte hingegen auch vom Gewicht des Stückguts 2, das transportiert werden soll, abhängig gewählt sein.

Der Fördergurt 4 ist als flacher Gurt mit einer Zugfestigkeit von bevorzugt mindestens 1600 N ausgebildet. Durch die ungleiche Größe der Abstände A und B ist gewährleistet, dass immer ein Mitnehmer 5 auf einer Rolle 6 gelagert ist. Dabei ist es vorteilhaft, dass der Abstand A der Rollen 6 kleiner als der Abstand B der Mitnehmer 5 ist. Dadurch liegt ein Mitnehmer 5 immer auf einer Rolle 6 auf, wodurch ein "Ruckeln" im Betrieb, das Geräusche und Verschleiß verursacht, reduziert werden kann.

Vorzugsweise beträgt das Verhältnis des zweiten Abstandes B der Rollen 6 zwischen aufeinanderfolgenden Achsen 6.1 zum Durchmesser der Rollen 6 weniger als 1,1. Bei einem Rollendurchmesser von 133 mm kann der zweite Abstand B beispielsweise 140 mm und bei einem Rollendurchmesser von 150 mm beispielsweise 160 mm betragen. So kann der zweite Abstand B etwa 7 bis 10 mm größer als der Rollendurchmesser sein. Damit lässt sich ein sehr ruhiger Lauf des Fördergurtes und des darauf mit Mitnehmern 5 gelagerten Baumstammes erreichen.

Wie Figur 3 zeigt, ist die Breite, also die Erstreckung des Fördergurts 4 quer zur Transportrichtung, TR_{H} größer als die Breite eines Mitnehmers 5. Dadurch ist sichergestellt, dass Verunreinigungen auf die Oberseite 4.1 des Fördergurts 4 fallen können, von der sie entweder von selbst während des Umlaufs abgeblasen oder im Laufe der gesamten Transportstrecke abgeführt werden können. In Transportrichtung TR_{H} wird kein Schmutz abgestreift. Er wird bis zum Antrieb transportiert und fällt dort herunter. In der Rückführrichtung TR_{R} kann sich vor der Umlenktrommel ein Abstreifer befinden, der verhindert, dass Schmutz in die Umlenktrommel gelangt. Zudem kann der Fördergurt 4 hierdurch im Rücklauf beidseits durch Stützrollen als Lager 9 seitlich aufgelagert und geführt werden. Außerdem kann dadurch der Mitnehmer 5 in vertikaler Richtung weit über den Fördergurt 4 hervorgehen, wodurch das Abwerfen des Stückguts vereinfacht wird.

In die der Montageoberfläche der Mitnehmer 5 gegenüberliegenden Unterseite des Fördergurtes 4 sind Befestigungsplatten eingebaut, an denen jeweils mindestens ein Mitnehmer 5 befestigt wird. Die Befestigungsplatten 10 können in eine Ausnehmung im Gummimaterial des Fördergurtes 4 eingebaut sein. Dabei sollte die Unterseite der Befestigungsplatte plan mit der Unterseite des Fördergurtes 4 abschließen, um eine plane Abrollebene auf den Rollen 6 sicherzustellen. Die Breite der Befestigungsplatten in Transportrichtung TR_{H} sollte möglichst groß sein, um eine möglichst lange Auflagerzeit beim Transport über eine Rolle 6 zu erreichen. Die Breite ist durch den Umlenkradius des Fördergurtes 4 begrenzt. Sie kann vorzugsweise im Bereich des Faktors 0,5 bis 1,1 des zweiten Abstandes B betragen. Im Hinblick auf den Umlenkradius des Fördergurtes hat sich eine Breite von 80 bis 120 mm als geeignet herausgestellt, um die Laufruhe der transportierten Stückgüter zu verbessern.

Wie bereits erwähnt, kann die Länge des Fördergurts 4 beliebig sein. Einzelne Segmente können zu einem Fördergurt 4 zusammengesetzt werden. Der obere Trum des endlosen Fördergurts 4 liegt auf den Rollen 6 auf und wird in Transportrichtung TR_{H} transportiert. Am Ende der Förderstrecke wird der Fördergurt 4 nach unten umgelenkt und der untere Trum des Fördergurts 4 dann in der Rückführrichtung TR_{R} innerhalb des Gestells 3 zurückgeführt. Über Lager 9 ist der untere Trum des Fördergurts 4 innerhalb des Gestells 3 geführt. Die Lager 9 können beispielsweise Stützrollen sein, welche die Seitenränder des Fördergurtes 4 auflagern und führen. Hierzu haben die Mitnehmer 5 eine geringere Breite, als die Breite des Fördergurtes 4.

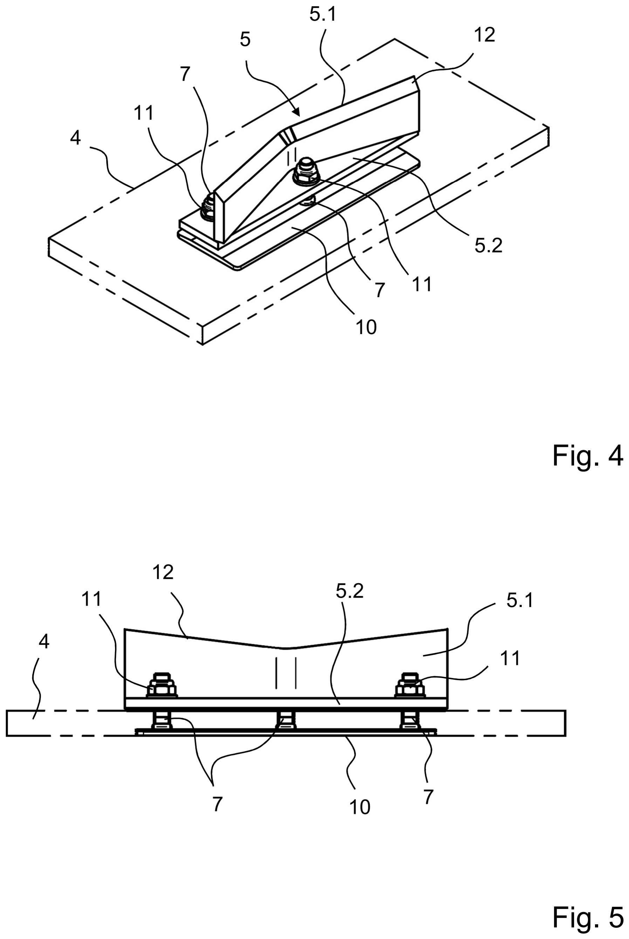

Figur 4 zeigt eine perspektivische Teilansicht des Fördergurtes 4 mit einem darauf befestigten Mitnehmer 5. Der Fördergurt 4 ist dabei transparent dargestellt, so dass die Befestigungsplatte 10 sichtbar ist. Der Mitnehmer 5 ist mit zwischenliegendem Fördergurt 4 im Abstand zur Befestigungsplatte 10 auf der Oberseite des Fördergurtes 4 angeordnet und mit Schraubbolzen 7 mit der Befestigungsplatte 10 verbunden. Die Schraubverbindung ist mit Muttern 11 auf den Schraubbolzen 7 lösbar gestaltet, so dass die Mitnehmer 5 auswechselbar sind.

Es ist erkennbar, dass der Mitnehmer 5 eine horizontal, d.h. parallel zur Ebene des Fördergurtes 4 ausgerichtete Stützplatte 5.2 hat, von der quer hierzu, d.h. vertikal, das Auflager 5.1 in Form eines V-förmigen Blechelementes abragt. Die freie obere Stirnseite 12 des Auflagers 5.1 kann wie dargestellt angefast und scharfkantig sein, um ein darauf aufgelagertes längliches Stückgut stabiler zu halten. Das Auflager 5.1 hat von einer Mittelachse des Fördergurtes 4 ausgehend diagonal zu den einander gegenüberliegenden Randbereichen abragende Blechabschnitte, um ein V-förmiges Querschnittsprofil zu bilden.

Im mittleren Bereich kann ein Schraubbolzen 7 mit zugehöriger Mutter in Transportrichtung TR_{H} an der Vorderseite des Mitnehmers 5 und an den äußeren Randbereichen jeweils ein Schraubbolzen an der Rückseite des Mitnehmers 5 angeordnet sein. Damit gelingt eine sehr stabile Befestigung.

Figur 5 zeigt eine Frontansicht des Mitnehmers 5 auf dem Fördergurt 4 aus Figur 4. Es ist erkennbar, dass das Auflager 5.1 an der oberen Stirnseite 12 zusätzlich zur Mittelachse des Fördergurtes 4 hin geneigt ist, um auch in dem dargestellten Querschnitt ein V-förmiges Profil zu bilden.

Weiterhin ist erkennbar, dass die Befestigungsplatte 10 in die Unterseite des Fördergurtes 4 eingelassen ist und bündig mit der Unterseite des Fördergurtes 4 abschließt.

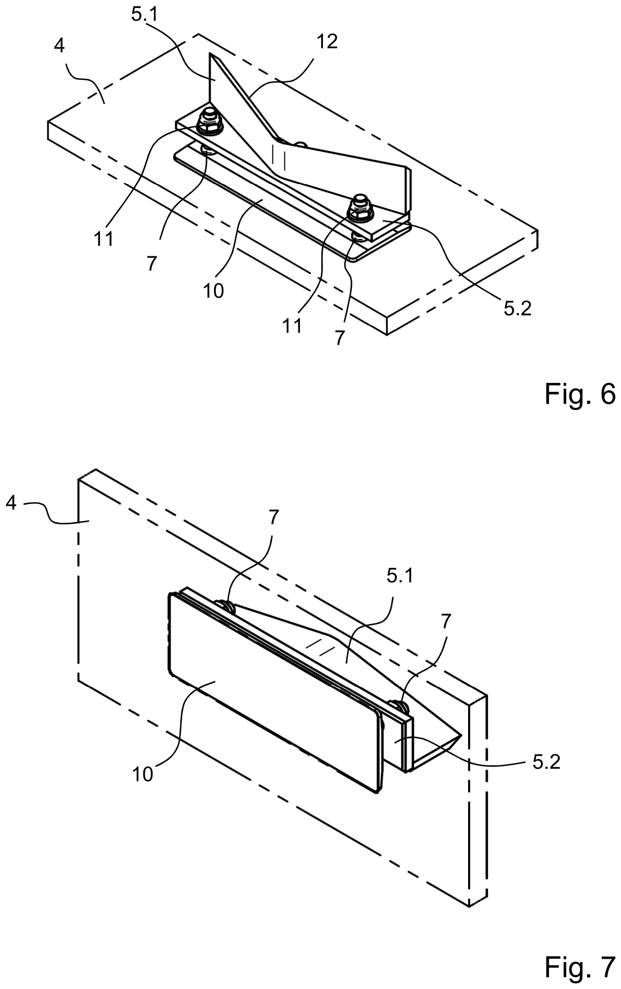

Figur 6 zeigt eine perspektivische Teilansicht des Fördergurtes 4 auf die Rückseite des darauf befestigten Mitnehmers 5 aus Figur 4.

Dabei ist erkennbar, dass an den Randbereichen auf der Rückseite der in Transportrichtung TR_{H} V-förmig ausgestellten Blechelemente des Auflagers 5.1 jeweils Schraubbolzen 7 mit zugehörigen Muttern 11 zur Befestigung des Mitnehmers 5 an der Befestigungsplatte 10 und dem Fördergurt 4 vorhanden sind.

Figur 7 zeigt eine perspektivische Ansicht auf die Unterseite des Fördergurtes 4 mit dem darauf befestigten Mitnehmer 5. Dabei wird die in den Fördergurt 4 eingelassene Befestigungsplatte 10 sichtbar, die in Transportrichtung TR_{H} breiter als die Stützplatte 5.2 ist

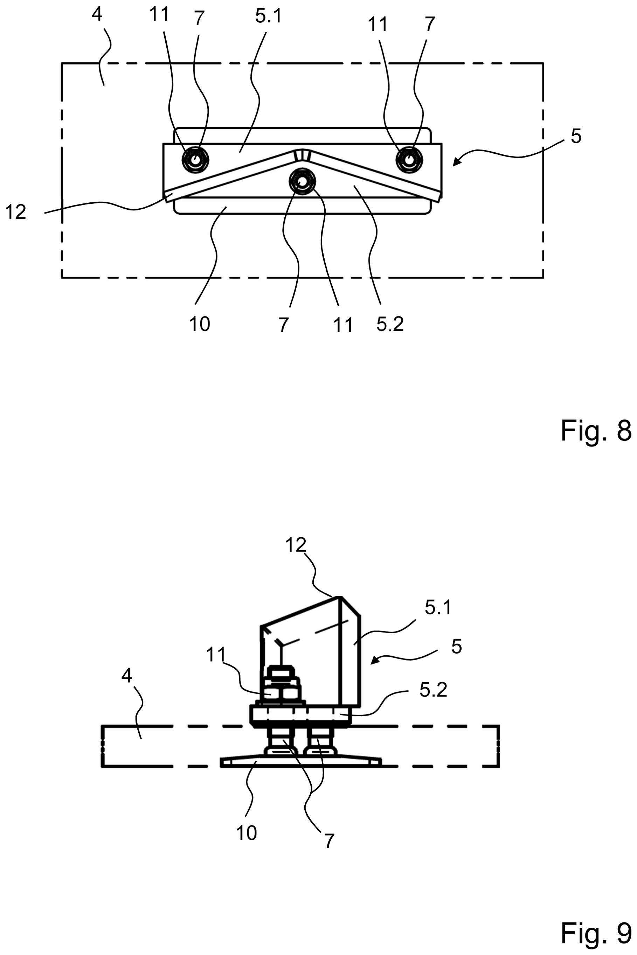

Figur 8 zeigt eine Draufsicht auf den Fördergurt 4 mit darauf befestigtem Mitnehmer 5.

Erkennbar ist die versetzte Anordnung des mittleren Schraubbolzens 7 zu den beiden äußeren Schraubbolzen 7. Zudem wird die angefaste scharfkantige Oberkante des Auflagers 5.1, d.h. die oberen Stirnseite 12, deutlich.

Figur 9 zeigt eine Seitenansicht des Fördergurtes 4 mit darauf befestigtem Mitnehmer 5.

Es ist erkennbar, dass sich die Schraubbonzen 7 von der Befestigungsplatte 10 durch den Fördergurt und die Stützplatte 5.2 hindurch erstrecken. Die Schraubbolzen 7 können mit der Befestigungsplatte 10 fest verschweißt sein, um eine glatte Unterseite der Befestigungsplatte 10 sicherzustellen. Die Schraubbolzen 7 sind hierzu als Anschweißbolzen ausgeführt. Denkbar ist aber auch ein Einschrauben der Schraubbolzen 7 von unten durch die Befestigungsplatte in eine Senkbohrung. Dies ist bei einer dünnen Befestigungsplatte 10 aber problematisch, so dass hierfür die stoffschlüssige Verbindung der Schraubbolzen 7 mit der Befestigungsplatte 10 bevorzugt ist.

### Bezugszeichenliste

- 1: Förderanlage
- 2: Stückgut/Baumstamm
- 3: Gestell
- 3.1: Längsstrebe
- 4: Fördergurt
- 4.1: Oberseite
- 4.2: Unterseite
- 5: Mitnehmer
- 5.1: Auflager
- 5.2: Stützplatte
- 6: Rolle
- 6.1: Achse/Achsbolzen
- 7: Schraubbolzen
- 8: Stahlseil
- 9: Lager
- 10: Befestigungsplatte
- 11: Mutter
- 12: obere Stirnseite

- TR_{H}: Transportrichtung
- TR_{R}: Rückführrichtung

## Patentansprüche

1. Förderanlage (1) zum Längstransport von länglichem Stückgut (2), insbesondere Baumstämmen, in einer Transportrichtung (TR_{H}) mit einem umlaufenden, in einem Gestell (3) gelagerten Fördergurt (4), an oder auf dessen Oberseite (4.1) eine Mehrzahl von Mitnehmern (5) vorgesehen ist, die in Transportrichtung (TR_{H}) in einem ersten Abstand (A) zueinander beabstandet sind und auf die das Stückgut (2) auflegbar ist, **dadurch gekennzeichnet, dass** der Fördergurt (4) mit seiner der Oberseite (4.1) gegenüberliegenden Unterseite (4.2) auf einer Mehrzahl von sich quer zur Transportrichtung (TR_{H}) erstreckenden Rollen (6) aufliegt, die in dem Gestell (3) drehbar gelagert und in Transportrichtung (TR_{H}) in einem zweiten Abstand (B) zueinander beabstandet sind.

2. Förderanlage (1) nach Anspruch 1, **dadurch gekennzeichnet, dass** der erste Abstand (A) und der zweite Abstand (B) ungleich groß sind.

3. Förderanlage (1) nach Anspruch 2, **dadurch gekennzeichnet, dass** der erste Abstand (A) größer als der zweite Abstand (B) ist.

4. Förderanlage (1) nach einem der Ansprüche 1 bis 3, **dadurch gekennzeichnet, dass** der erste Abstand (A) kein Vielfaches von dem zweiten Abstand (B) ist.

5. Förderanlage (1) nach einem der vorstehenden Ansprüche, **dadurch gekennzeichnet, dass** der zweite Abstand (B) einstellbar ist.

6. Förderanlage (1) nach einem der vorstehenden Ansprüche, **dadurch gekennzeichnet, dass** jeder Mitnehmer (5) mit dem Fördergurt (4) lösbar verbunden, vorzugsweise verschraubt ist.

7. Förderanlage (1) nach einem der vorstehenden Ansprüche, **dadurch gekennzeichnet, dass** jeder Mitnehmer (5) mehrteilig, vorzugsweise zweiteilig, ausgestaltet ist.

8. Förderanlage (1) nach einem der vorstehenden Ansprüche, **dadurch gekennzeichnet, dass** jeder Mitnehmer (5) ein oberes Auflager (5.1) und eine untere Stützplatte (5.2) aufweist.

9. Förderanlage (1) nach Anspruch 7, **dadurch gekennzeichnet, dass** die Stützplatte (5.2) mit dem Fördergurt (4) lösbar verbunden, vorzugsweise verschraubt ist.

10. Förderanlage (1) nach Anspruch 5 oder 8, **dadurch gekennzeichnet, dass** die Verbindung mittels mindestens zwei Schrauben (7), bevorzugt mittels drei Schrauben (7), erfolgt.

11. Förderanlage (1) nach einem der vorstehenden Ansprüche, **dadurch gekennzeichnet, dass** die dem Fördergurt (4) abgewandte obere Stirnseite (12) eines Mitnehmers (5) im Querschnitt konkav ausgestaltet ist.

12. Förderanlage (1) nach einem der vorstehenden Ansprüche, **dadurch gekennzeichnet, dass** die dem Fördergurt (4) abgewandte obere Stirnseite (12) eines Mitnehmers (5) scharfkantig ist.

13. Förderanlage (1) nach einem der vorstehenden Ansprüche, **dadurch gekennzeichnet, dass** die Mitnehmer (5) in Transportrichtung (TR_{H}) im Querschnitt V-förmig ausgerichtet sind, wobei sich von einem mittleren Bereich diagonal zwei Abschnitte des Mitnehmers (5) zu den Randbereichen des Fördergurtes (4) hin erstrecken.

14. Förderanlage (1) nach einem der vorhergehenden Ansprüche, **dadurch gekennzeichnet, dass** der Fördergurt (4) jeweils auf der einem der Mitnehmer (5) diametral gegenüberliegenden Unterseite eine Befestigungsplatte (10) hat.

15. Förderanlage (1) nach Anspruch 14, **dadurch gekennzeichnet, dass** die Befestigungsplatte (10) in einer Ausnehmung des Fördergurtes (4) eingelassen ist.

16. Förderanlage (1) nach Anspruch 14 oder 15, **dadurch gekennzeichnet, dass** die Befestigungsplatte (10) eine Breite in Förderrichtung des Fördergurtes (4) hat, die mindestens die Hälfte des zweiten Abstandes (B) und bevorzugt mindestens drei Viertel (3/4) des zweiten Abstandes (B) aufweist.

17. Förderanlage (1) nach einem der vorhergehenden Ansprüche, **dadurch gekennzeichnet, dass** der zweite Abstand (B) zwischen den Achsen (6.1) benachbarter Rollen (6) ein Verhältnis von weniger als 1,1 zum Durchmesser der Rollen (6) aufweist.

18. Förderanlage (1) nach einem der vorhergehenden Ansprüche, **dadurch gekennzeichnet, dass** sich die Mitnehmer (5) nicht über die gesamte Breite des Fördergurtes (4) erstrecken und der Fördergurt (4) beidseits im Rücklauf in einem Randbereich an Stützrollen (9) aufgelagert ist.
